# EUROPEAN PATENT SPECIFICATION

(11) **EP 2 190 331 B1**
(45) Date of publication and mention of the grant of the patent: **12.10.2016**
(21) Application number: 08782986.7
(22) Date of filing: 22.08.2008
(51) Int. Cl.: A47J 37/07

(54) **IMPROVEMENTS IN BARBEQUES**
VERBESSERUNGEN FÜR BRATROSTE
AMÉLIORATIONS DANS DES BARBECUES

(30) Priority: 17.09.2007 AU 2007905063
(43) Date of publication of application: 02.06.2010
(73) Proprietor: Shriro Australia PTY Limited, Lane Cove, NSW 2066 (AU)
(72) Inventor: LEAVENS, Benjamin, John, Woollahra, NSW 2025 (AU); ROPER, Alan, Mark, Perth, W.A. 6031 (AU); GARVEY, Phillip, John, Glebe, New South Wales 2037 (AU)
(74) Representative: Brown, Alexander Edward
(86) International application number: PCT/AU2008/001238
(87) International publication number: WO 2009/036488

(56) References cited:
- WO-A1-2004/054416
- CA-A1- 2 171 912
- US-A- 4 108 142
- US-A- 4 762 059
- US-A- 5 237 914
- US-A- 5 878 657
- US-A- 5 968 387
- US-A1- 2002 106 428
- US-A1- 2005 092 191
- US-B1- 6 189 530

## Description

### Field of the Invention

The present invention relates to improvements in barbeques.

The invention has been primarily developed for use in gas barbeques having rail type burners and will be described hereinafter with reference to this application.

### Background of the Invention

Many types of gas barbeque are known. For example, barbeques having rectangular grill plates positioned above rectangular, or rail type, gas burners are known. The rail type burners are generally rectangular and extend between the front and rear ends of the rectangular grill plates. In order to provide space at the front of the barbeque for burner control valves and the like, the horizontal distance between the front ends of the burners and the grill plates is often larger than the horizontal distance between the rear ends of the burners and grill plates. As a result, the burners do not heat the grill plates evenly with the rear of the grill plates becoming hotter than the front of the grill plates. This causes uneven cooking.

Barbeques with circular grill plates and circular burners generally do not suffer from this problem as the burners and grill plates are substantially symmetrical front to rear and side to side.

An example of such a barbeque is disclosed in US Patent No. 6,189,530. The barbeque includes a round, sheet-like, transfer plate that has an upwardly facing convex cooking surface.

Grill plates are also known with a series of holes or openings therein, which allow fat and other fluids to drain away from food being cooked. However, such fluids can ignite when they fall onto the burner flames. The resultant flames can also pass back through the holes in the grill plate and are undesirable as a safety hazard. They can also burn the food being cooked. Barbeques are also known with solid grill plates (i.e. without any openings therein) which have one or more channels about their periphery with a drain hole through which fat and other fluids is directed. However, existing arrangements direct, and collect, such fluids between the grill plate and the burners. This is dangerous as the fluids, which are flammable, collect near a flame. Additionally, the collected fluid is often gathered at the rear of the barbeque which makes it difficult to remove and/or clean, often requiring significant disassembly of the barbeque.

Barbeques are also known which have some form of recess in the grill plate within which liquids or other materials such as woodchips can be placed in order to contribute moistures or other flavours to food being cooked. However, such recesses reduce the available cooking space of the grill plate and can render this type of barbeque unsuitable or inefficient for use without a substance being placed in the recess.

### Object of the Invention

It is the object of the present invention to substantially overcome or at least ameliorate one or more of the above disadvantages.

### Summary of the Invention

Accordingly, in a first aspect, the present invention provides a barbeque comprising:
at least one grill plate extending between a front end and a rear end and having an upper surface;
at least one gas burner extending between a front end and a rear end, the front end of the at least one burner being inward of the front end of the at least one grill plate; and
a drainage arrangement extending between a front end and a rear end for directing fluid from the upper surface of the at least one grill plate to beneath the least one burner,
wherein the drainage arrangement is positioned inwardly of the front end of the at least one grill plate and outwardly of the front end of the at least one burner, characterised in that the burner extends substantially between all of the front end and the rear end of the grill plate apart from the space required to accommodate the drainage arrangement under the grill plate and near the front end.

The barbeque preferably comprises a pair of grill plates, which are most preferably substantially rectangular. The barbeque preferably comprises four burners, which are most preferably substantially rectangular. A pair of the burners are preferably positioned beneath each of the grill plates.

The drainage arrangement preferably includes a first receptacle, with an opening in its lowermost point, extending substantially across the width of each of the grill plate(s). The first receptacle(s) is/are preferably integrally formed with each of the grill plate(s) and positioned adjacent the front end of each of the grill plate(s). The drainage arrangement preferably also includes a frontwardly downwardly sloping upper surface of each of the grill plate(s).

The drainage arrangement preferably includes a second receptacle, with an opening in its lowermost point, adapted to collect the fluid draining from the first receptacle(s). The second receptacle preferably extends substantially across the width of all of the grill plates, beneath the first receptacle(s). The second receptacle is preferably adjacent the front end of the grill plate(s).

The drainage arrangement preferably also includes a reservoir adapted to collect the fluid draining from the second receptacle. The reservoir is preferably positioned beneath the burner(s).

### Brief Description of the Drawings

Preferred embodiments of the invention will now be described, by way of examples only, with reference to the accompanying drawings in which:
Fig. 1 is a perspective view of an embodiment of a barbeque;
Fig. 2 is a cutaway view of the barbeque shown in Fig. 1 at line 2.2;
Fig. 3 is a partial perspective view of a first embodiment of a grill plate;
Fig. 4 is a front view of the grill plate shown in Fig. 3;
Fig. 5 is an upper perspective view of the grill plate shown in Fig. 3;
Fig. 6 is an upper perspective view of a second embodiment of a grill plate.
Fig. 7 is an upper perspective view of a third embodiment of a grill plate;
Fig. 8 is an upper perspective view of a fourth embodiment of a grill plate;
Fig. 9 is a partial perspective view view of the grill plate shown in Fig. 3;
Fig. 10 is a side view of the grill plate shown in Fig. 9, adjacent a burner;
Fig. 11 is an underside perspective view of the grill plate shown in Fig. 3;
Fig. 12 is an upper perspective view of an embodiment of a burner;
Fig. 13 is an exploded view of the burner shown in Fig. 12, with a fluid therein;
Fig. 14 is a cut-away view of the burner shown in Fig. 13 installed in a barbeque;
Fig. 15 is an exploded view of the burner shown in Fig. 12 with solids therein; and
Fig. 16 is a cut-away view of the burner shown in Fig. 15 installed in a barbeque.

### Detailed Description of the Preferred Embodiments

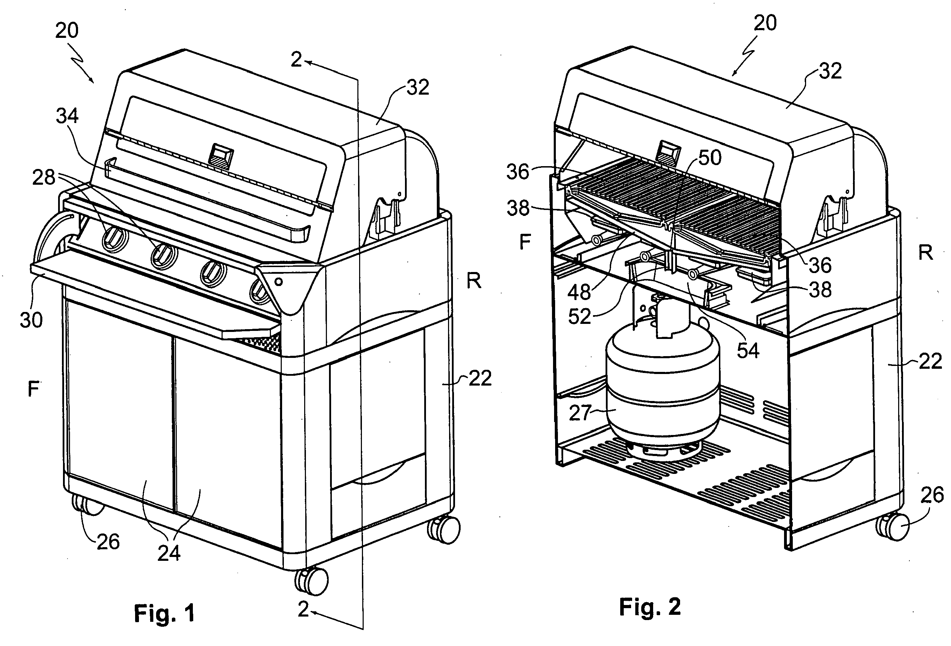

Fig. 1 shows an embodiment of a barbeque 20 with a front F and rear R. The front and rear of all components of the barbeque in all drawings shall be indicated with a F and an R respectively. The barbeque 20 has a body 22, with a pair of forwardly opening doors 24, on castors 26. A gas cylinder 27 is located within the body 22 and accessed via the doors 24. The barbeque 20 also includes a series of burner controllers 28 mounted behind a hinged panel 30. The barbeque 22 also includes a hood 32, with a handle 34, which can be hinged from the position shown in Fig. 1 towards the rear of the barbeque 20.

As best shown in Fig. 2, opening the hood 32 in this way provides access to a pair of rectangular grill plates 36. The grill plates 36 extend from the front to the rear of the barbeque 20. A pair of gas, rail-type, burners 38 are mounted beneath each of the grill plates 36.

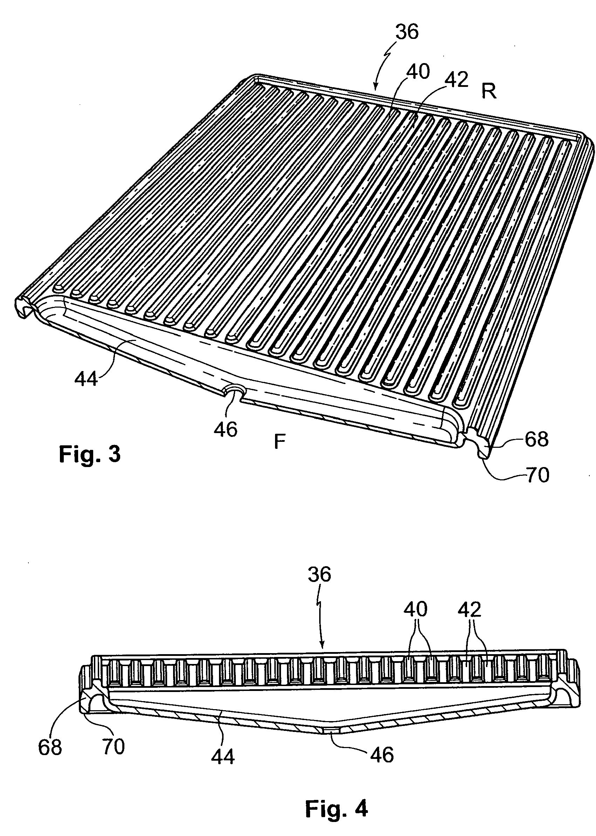

As best shown in Figs. 3 to 5, the grill plates 36 include a series of longitudinal ridges 40 with a series of longitudinal channels 42 therebetween, which extend between the front and rear ends of the grill plate 36. The grill plates 36 also each include a first receptacle 44 adjacent and along their front ends. As best shown in Fig. 4, the receptacles 44, when viewed from the front, have a substantially shallow V-shape and a central opening 46 at their lowermost point. The receptacles 44 forms part of a drainage arrangement, the remainder of which will be described in more detail below.

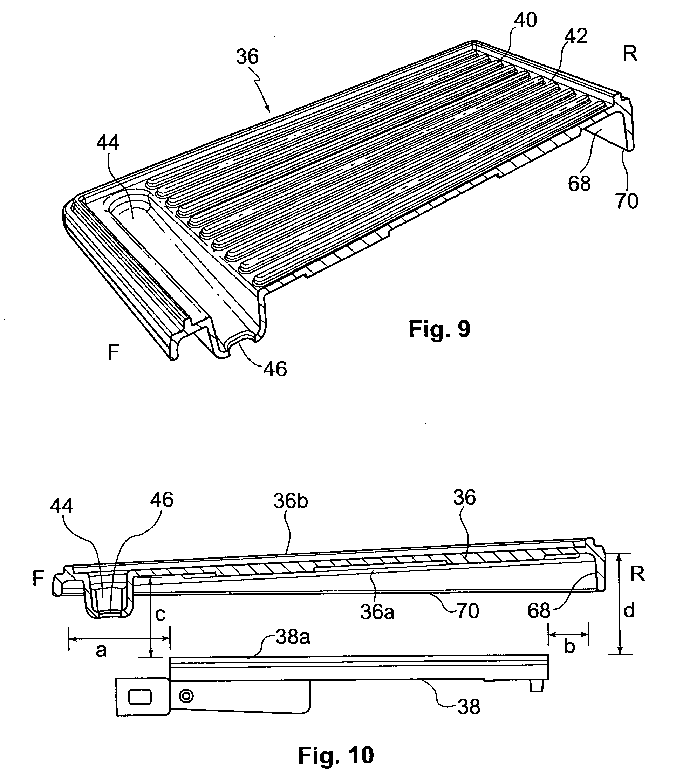

As best shown in Fig. 2, the drainage arrangement also includes a second shallow V-shaped receptacle 48 positioned beneath the first receptacles 44. The second receptacle 48 includes an opening 50 at its lowermost point which leads to a downwardly directed duct 52. The duct 52 is positioned above a removable container 54. The drainage arrangement also includes upper surfaces 36a of the grill plates 36 which, as best shown in Fig. 10, are angled downwardly (about 2.5 degress from horizontal) from their rear ends to their front ends, and thus towards the first receptacles 44.

The operation of the drainage arrangement will now be described. During cooking, fats, juices and other fluids from food being cooked drain, under influence of gravity, forwardly along the upper surface 36a of the grill plates 36 into the first receptacles 44. The fluids collected in the receptacles 44 then drain, under influence of gravity, through openings 46 into the second receptacle 48. Fluids collected in the second receptacle 48 then drain, again under influence of gravity, through the opening 50 and then the duct 52 into the container 54.

This drainage arrangement has numerous advantages. Firstly, the removal of the fats, juices and other fluids from the food provides a healthier cooked food. Secondly, the container 54 is positioned below the burners 38 and thus beneath a source of flame, thereby improving safety. Thirdly, the container 54 is positioned at the front F of the barbeque 20 for convenient removal for emptying. Fourthly, when viewed from the side, all components of the drainage arrangement are positioned forwardly away from the burners 38 and thus forwardly away from their flames, again improving safety.

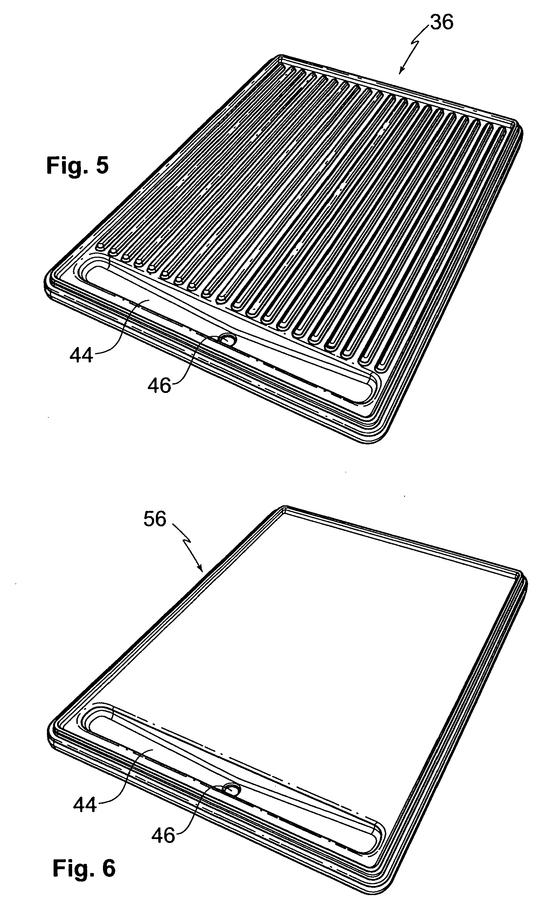

Fig. 6 shows a second embodiment of a grill plate 56, which can also be used with the barbeque 20. The grill plate 56 is substantially identical in construction and operation to that of the grill plate 36 except it has a planar upper surface.

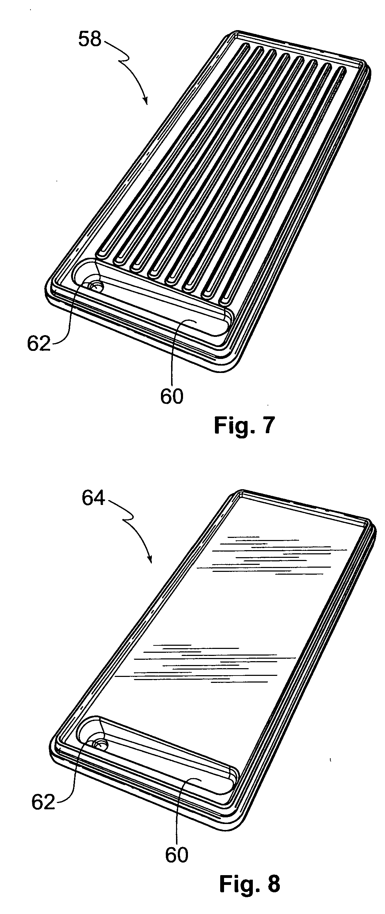

Fig. 7 shows a third embodiment of a grill plate 58 which can also be used with the barbeque 20. The construction and operation of the grill plate 58 is again substantially identical to that of the grill plate 36 except its drain receptacle 60 slopes in only one direction and has an opening 62 at the lowermost end of the receptacle 60.

Fig. 8 shows a fourth embodiment of a grill plate 64 which can be used with the barbeque 20. The grill plate 64 is substantially identical in construction and operation to that of the grill plate 58, except it has a planar upper surface.

All of the previously described grill plates can be used in various combinations with the barbeque 20 in order to best suit the food being cooked thereon.

Fig. 10 shows the positioning of the grill plates 36 relative to the burners 38. When viewed from the side, the horizontal distance between the front ends of the grill plate 36 and the burner 38, denoted a, is larger than the horizontal distance between the rear ends of the grill plate 36 and the burner 38, denoted b. Further, the upper surface 38a of the burner 38 is substantially horizontal, whereas lower surface 36b of the grill plate 36 is inclined at about two and a half degrees to horizontal. As a result, the vertical distance between the front ends of the grill plate 36 and burner 38, denoted c, is smaller than the vertical distance between the rear ends of the grill plate 36 and burner 38, denoted d. This inclination positions the front end of the grill plate 36 closer to the flame of the burner 38 compared to that of the rear end of the grill plate 36. This advantageously provides more heat to the the front end of the grill plate 36 compared to that of the rear end of the grill plate 36 and results in a more even temperature distribution over the cooking surface of the grill plate 36.

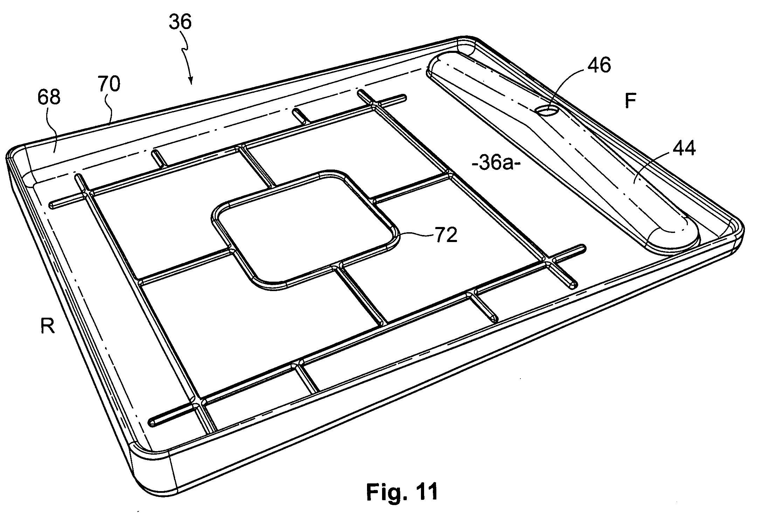

The grill plate 36 also includes a downwardly depending peripheral flange 68 with a horizontal distal edge 70. The flange 68 assists with the even heat distribution as it concentrates heat toward the front of the grill plate 36 by encapsulating the convection currents. As best shown in Fig. 11 the lower surface 36b of the grill plate 36 also includes a number of raised baffles 72, which strengthen the grill plate 36.

In addition, the central cooking surface of the grill plate 36 has a substantially constant thickness. As a result, the inclination of the lower surface 36b is mirrored in the upper surface 36a, which conveniently drains fluids towards the receptacle 44, as previously discussed.

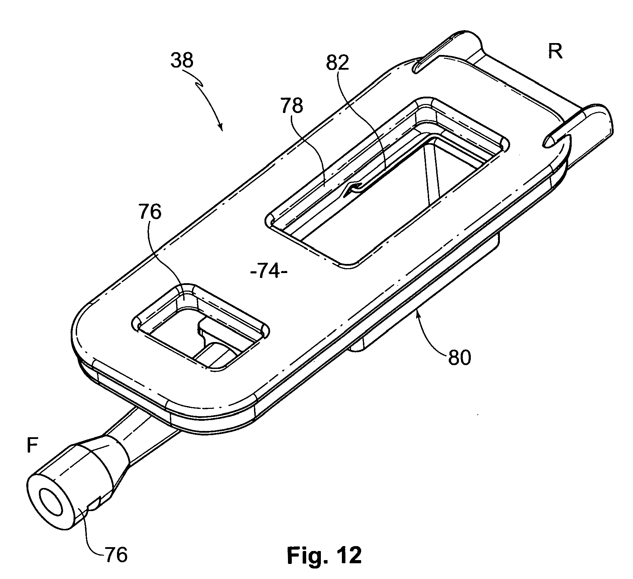

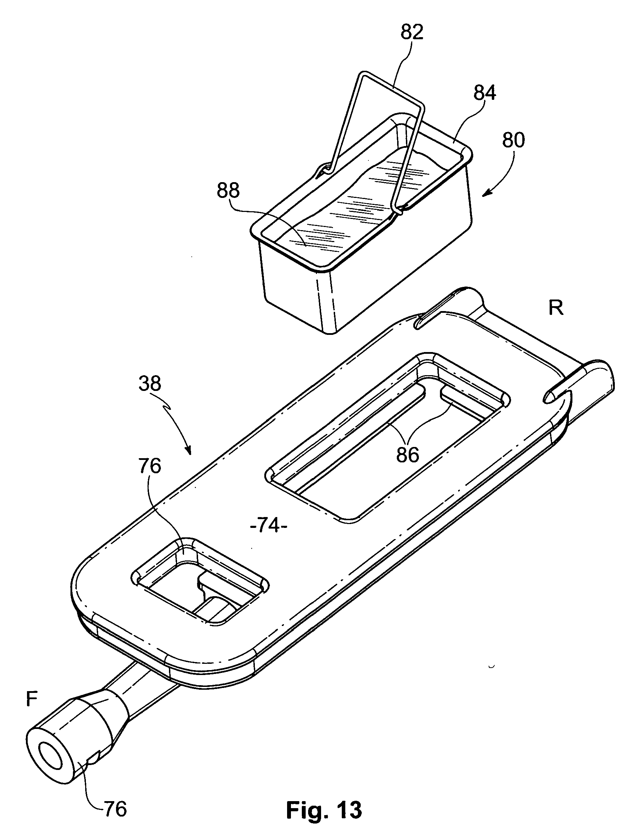

Fig. 12 shows, in isolation, one of the burners 38. The burner 38 has a substantially rectangular hollow body 74, which receives gas from an inlet pipe 76. The body 74 has a pair of openings 76 and 78. The body 74 has a series of flame holes around its outer periphery and also the inner periphery of the openings 76 and 78. The burner 38 also includes a removable container 80 which can be inserted within the opening 78. As best shown in Fig. 13, the container 80 includes a handle 82 and an outwardly directed flange 84 around its upper end. When inserted in the opening 78, the flange 84 rests upon ledges 86 to releasably retain the container 80 adjacent the opening 78.

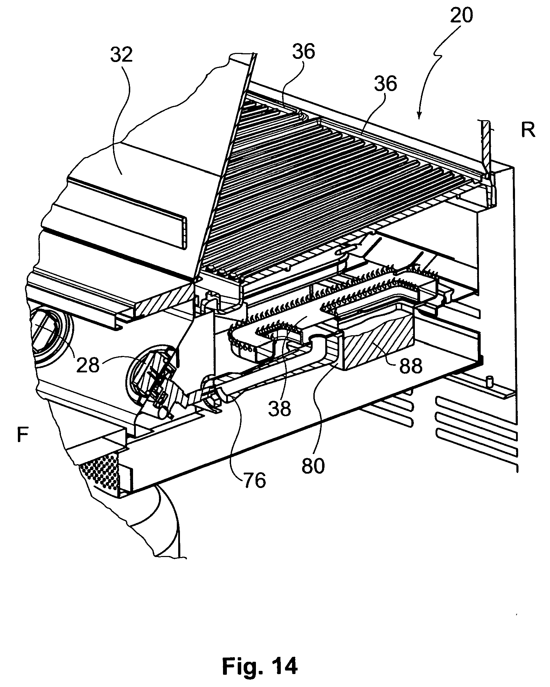

Figs. 13 and 14 show the container 80 filled with a fluid 88, for example water. The container 80 and the water 88 become heated in use and impart moisture to the food being cooked to prevent it drying out during the cooking process. Flavoured liquids, such as wine, can also be added to the container 80 in order to impart both moisture and additional flavour to the food being cooked.

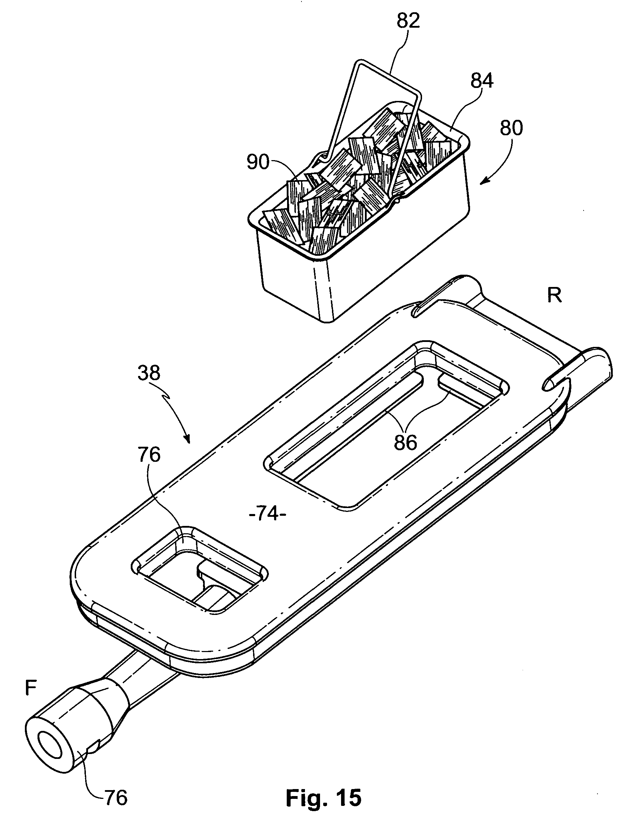

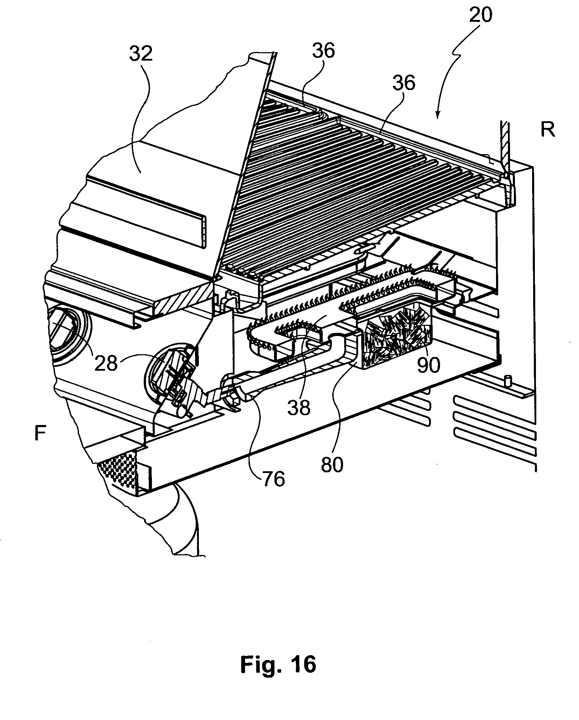

Figs. 15 and 16 show the container 80 filled with woodchips 90 which, upon heating, impart a smoked flavour to the food being cooked.

The releasable container 80 can advantageously be quickly and easily removed from the barbeque 20 when its use is not required. It can easily be removed for cleaning or refilling, is adapted to hold a variety of different materials and its use does not reduce the barbeque's overall cooking area.

Although the invention has been described with reference to preferred embodiments, it will be appreciated by persons skilled in the art that the invention may be embodied in many other forms. For example, the barberque can also be made in a 2-burner configuration consisting of 1 hotplate, a 6-burner configuration consisting of 3 hotplates, and an 8-burner configuration consisting of 4-hotplates.

## Claims

1. A barbeque comprising:
at least one grill plate (36) extending between a front end and a rear end and having an upper surface (36a);
at least one gas burner (38) extending between a front end and a rear end, the front end of the at least one burner being inward of the front end of the at least one grill plate; and
a drainage arrangement extending between a front end and a rear end for directing fluid from the upper surface of the at least one grill plate to beneath the least one burner,
wherein the drainage arrangement is positioned inwardly of the front end of the at least one grill plate and outwardly of the front end of the at least one burner, **characterised in that** the burner extends substantially between all of the front end and the rear end of the grill plate apart from the space required to accommodate the drainage arrangement under the grill plate and near the front end.

2. The barbeque as claimed in claim 1, wherein the drainage arrangement includes a first receptacle (44), with an opening (46) in its lowermost point, extending substantially across the width of each of the grill plate(s) (36).

3. The barbeque as claimed in claim 2, wherein the first receptacle(s) (44) is/are integrally formed with each of the grill plate(s) (36) and positioned adjacent the front end of each of the grill plate(s).

4. The barbeque as claimed in claim 2 or 3, wherein the drainage arrangement also includes a frontwardly downwardly sloping upper surface (36a) of each of the grill plate(s) (36).

5. The barbeque as claimed in claim 2, 3 or 4, wherein the drainage arrangement includes a second receptacle (48), with an opening (50) in its lowermost point, adapted to collect the fluid draining from the first receptacle(s) (44).

6. The barbeque as claimed in claim 5, wherein the second receptacle (48) extends substantially across the width of all of the grill plates (36), beneath the first receptacle(s) (44).

7. The barbeque as claimed in claim 5 or 6, wherein the second receptacle (48) is adjacent the front end of the grill plate(s) (36).

8. The barbeque as claimed in claim 5, 6 or 7, wherein the drainage arrangement also includes a reservoir (54) adapted to collect the fluid draining from the second receptacle (48).

9. The barbeque as claimed in claim 8, wherein the reservoir (54) is positioned beneath the burner(s) (38).

## Patentansprüche

1. Bratrost, umfassend:
zumindest eine Grillplatte (36), die sich zwischen einem vorderen Ende und einem hinteren Ende erstreckt und eine Oberfläche (36 a) aufweist;
zumindest einen Gasbrenner (38), der sich zwischen einem vorderen Ende und einem hinteren Ende erstreckt, wobei das vordere Ende des zumindest einen Gasbrenners einwärts von dem vorderen Ende der zumindest einen Grillplatte liegt; und
eine Ablaufvorrichtung, die sich zum Leiten von Flüssigkeit von der Oberfläche der zumindest einen Grillplatte bis unter den zumindest einen Brenner zwischen einem vorderen Ende und einem hinteren Ende erstreckt,
wobei die Ablaufvorrichtung einwärts von dem vorderen Ende der zumindest einen Grillplatte und auswärts von dem vorderen Ende des zumindest einen Brenners angeordnet ist, **dadurch gekennzeichnet, dass** sich der Brenner im Wesentlichen zwischen dem gesamten vorderen Ende und dem hinteren Ende der Grillplatte erstreckt, abgesehen von dem zur Aufnahme der Ablaufvorrichtung benötigten Platz unter der Grillplatte und nahe dem vorderen Ende.

2. Bratrost nach Anspruch 1, wobei die Ablaufvorrichtung einen ersten Behälter (44) mit einer Öffnung (46) an seiner tiefsten Stelle einschließt, der sich im Wesentlichen über die Breite jeder der Grillplatte(n) (36) erstreckt.

3. Bratrost nach Anspruch 2, wobei der erste Behälter (die ersten Behälter) (44) einstückig mit jeder der Grillplatte(n) (36) gebildet und benachbart zu dem vorderen Ende jeder der Grillplatte(n) angeordnet ist (sind).

4. Bratrost nach Anspruch 2 oder 3, wobei die Ablaufvorrichtung außerdem eine vorderseitig nach unten abgeschrägte Oberfläche (36 a) jeder der Grillplatte(n) (36) einschließt.

5. Bratrost nach Anspruch 2, 3 oder 4, wobei die Ablaufvorrichtung einen zweiten Behälter (48) mit einer Öffnung (50) an seiner tiefsten Stelle einschließt, der angepasst ist, um die von dem ersten Behälter (den ersten Behältern) (44) ablaufende Flüssigkeit zu sammeln.

6. Bratrost nach Anspruch 5, wobei der zweite Behälter (48) sich im Wesentlichen über die Breite der gesamten Grillplatte(n) (36) unter den (die) ersten Behälter (44) erstreckt.

7. Bratrost nach Anspruch 5 oder 6, wobei der zweite Behälter (48) benachbart zu dem vorderen Ende der Grillplatte(n) (36) liegt.

8. Bratrost nach Anspruch 5, 6 oder 7, wobei die Ablaufvorrichtung außerdem einen Sammelbehälter (54) einschließt, der angepasst ist, um die von dem zweiten Behälter (48) ablaufenden Flüssigkeit zu sammeln.

9. Bratrost nach Anspruch 8, wobei der Sammelbehälter (54) unter dem Brenner (den Brennern) (38) angeordnet ist.

## Revendications

1. Barbecue comprenant :
au moins une plaque à grillade (36) s'étendant entre une extrémité avant et une extrémité arrière et ayant une surface supérieure (36a) ;
au moins un brûleur au gaz (38) s'étendant entre une extrémité avant et une extrémité arrière, l'extrémité avant de l'au moins un brûleur étant vers l'intérieur par rapport à l'extrémité avant de l'au moins une plaque à grillade ; et
un dispositif de drainage s'étendant entre une extrémité avant et une extrémité arrière pour guider le fluide de la surface supérieure de l'au moins une plaque à grillade sous l'au moins un brûleur,
dans lequel le dispositif de drainage est positionné vers l'intérieur par rapport à l'extrémité avant de l'au moins une plaque à grillade et à l'extérieur de l'extrémité avant de l'au moins un brûleur, **caractérisé en ce que** le brûleur s'étend en grande partie entre l'ensemble de l'extrémité avant et l'extrémité arrière de la plaque à grillade hormis l'espace requis pour accueillir le dispositif de drainage sous la plaque à grillade et près de l'extrémité avant.

2. Barbecue selon la revendication 1, dans lequel le dispositif de drainage comprend un premier réceptacle (44), avec une ouverture (46) dans son point le plus bas, s'étendant en grande partie à travers la largeur de chacune de la / des plaque (s) à grillade (36).

3. Barbecue selon la revendication 2, dans lequel le (s) premier(s) réceptacle(s) (44) est/sont intégralement formé(s) de chacune de la / des plaque(s) à grillade (36) et positionné(s) de façon adjacente à l'extrémité avant de chacune de la / des plaque(s) à grillade.

4. Barbecue selon la revendication 2 ou 3, dans lequel le dispositif de drainage comprend également une surface supérieure en pente vers l'avant et vers le bas (36a) de chacune de la / des plaque (s) à grillade (36).

5. Barbecue selon la revendication 2, 3 ou 4, dans lequel le dispositif de drainage comprend un second réceptacle (48), avec une ouverture (50) dans son point le plus bas, adapté pour recueillir le drainage de fluide du/des premier(s) réceptacle(s) (44).

6. Barbecue selon la revendication 5, dans lequel le second réceptacle (48) s'étend en grande partie à travers la largeur de l'ensemble des plaques à grillade (36), sous le(s) premier(s) réceptacles (s) (44).

7. Barbecue selon la revendication 5 ou 6, dans lequel le second réceptacle (48) est adjacent à l'extrémité avant de la / des plaque (s) à grillade (36).

8. Barbecue selon la revendication 5, 6 ou 7, dans lequel le dispositif de drainage comprend également un réservoir (54) adapté pour recueillir le drainage de fluide du second réceptacle (48).

9. Barbecue selon la revendication 8, dans lequel le réservoir (54) est positionné sous le(s) brûleur(s) (38).
